# EUROPEAN PATENT SPECIFICATION

(11) **EP 1 448 907 B1**
(45) Date of publication and mention of the grant of the patent: **07.07.2010**
(21) Application number: 02736348.0
(22) Date of filing: 24.05.2002
(51) Int. Cl.: F16D 1/08, F16K 5/06

(54) **COUPLING DEVICE, PREFERABLY BETWEEN AN ACTUATOR AND A VALVE**
KUPPLUNGSVORRICHTUNG, VORZUGSWEISE ZWISCHEN EINEM STELLGLIED UND EINEM VENTIL
DISPOSITIF DE COUPLAGE, DE PREFERENCE, ENTRE UN ACTIONNEUR ET UNE VALVE

(30) Priority: 11.06.2001 SE 0102066
(43) Date of publication of application: 25.08.2004
(73) Proprietor: Aktiebolaget Somas Ventiler, S-661 23 Säffle (SE)
(72) Inventor: NILSSON, Curt, S-661 43 Säffle (SE)
(74) Representative: Johansson, Lars-Erik
(86) International application number: PCT/SE2002/000999
(87) International publication number: WO 2002/101255

(56) References cited:
- US-A- 5 006 007
- US-A- 5 318 477

## Description

### TECHNICAL FIELD

The present invention relates to a coupling device, preferably in connection with a valve, between a shaft and a force-transmitting organ, comprising a form-locking coupling that is arranged at a first position between said force-transmitting organ and said shaft, which coupling is dimensioned such that a large maximum torque can be transmitted via said coupling.

### PRIOR ART

Form-locking couplings, of the cotter joint type, are common and are often necessary to be able to transmit sufficient torque from an actuator to a valve cone when closing or opening a valve. The reason that a form-locking coupling is used more often than not is due to the fact that the torque required in connection above all with closing can be very large. Thus a friction coupling, for example, is not enough in most cases to ensure closing and/or opening. Consequently, all valves in principle are fitted with a form-locking coupling between the valve cone and the actuator. A disadvantage of form-locking couplings is that in practice it is impossible in principle to avoid a certain slight play, regardless of whether it consists of a cotter joint, square locking, "flat head' coupling etc. This slight play means that it can be difficult in a regulating position to obtain exact fine positioning of the valve cone, which causes difficulties in achieving optimum control of the flow through the valve. The problem has been accentuated by sharply increased use of sophisticated high-performance positioning/control technology, which can thus not always be utilized fully on account of said play. Thus there is a strong need for an entirely play-free coupling. Powerful clamp/friction couplings that can be constructed entirely without play are previously known, for example from US 5,006,007 and US 5,318,477. However, these have not had any commercial success, for various reasons. This is probably due chiefly to the fact that these known play-free couplings have an expensive design solution, especially in combination with the fact that they are bulky. Furthermore, there is a safety risk with a construction of this type, in that when any part breaks, they release hold altogether, which can have drastic consequences. In addition, they are hard to access when fitting/dismantling.

### BRIEF DESCRIPTION OF THE INVENTION

One object of the invention is to eliminate or at least minimize the aforementioned problems, which is achieved by means of a coupling device, preferably in connection with a valve, between a shaft and a force-transmitting organ, comprising a form-locking coupling that is arranged at a first position between said force-transmitting organ and said shaft, which coupling is dimensioned such that a certain torque can be transmitted via said coupling, a second coupling, in the form of an essentially non-form-locking coupling, being arranged between said shaft and said force-transmitting organ, to complement said form-locking coupling, said essentially non-form-locking coupling being play-free.

Thanks to the solution, play is eliminated in the regulating position, so that sophisticated positioning systems can be fully utilized. At the same time, an entirely secure locking coupling is obtained thanks to the use of a form-locking coupling. Thus secure closing and opening of the valve can be assured by means of a cost-effective, conventional form-locking coupling. The essentially non-form-locking coupling, preferably a clamp and/or friction coupling, only needs here to be able to take up the slight forces that act on the valve cone in the regulating position, meaning that the further coupling can be dimensioned if desired for considerably lower torques/forces than the form-locking coupling. In addition, the further coupling relieves the form-locking coupling, which offers increasing opportunities for optimizing the various couplings from an overall perspective and also reduces wear and thereby extends the life of the valve arrangement. Furthermore, the interacting couplings are made in relatively small dimensions that result in reasonable costs and also make them non-bulky and easy to achieve optimum positioning of in the valve arrangement. The requirement for precision in the form-locking coupling is also reduced, which means even lower manufacturing costs and simpler assembly/disassembly.

According to further aspects of the invention, it is the case that:
- said second coupling includes elements that are integrated with said force-transmitting organ,
- said elements are sprung,
- said sprung elements consist of at least two spring legs, preferably at least three, that extend at one end of said force-transmitting organ,
- said second coupling comprises a clamp device,
- said clamp device includes at least one threaded joint, with which the clamp coupling is fixed,
- said force-transmitting organ is arranged lying externally, at least partly, in relation to said shaft,
- said force-transmitting organ forms part of an actuator and said shaft consists of a spindle in a valve,
- the position of said second coupling is at least partly axially displaced in relation to said first position,
- said fixing is obtained by means of pre-tensioning in said threaded joint,
- the maximum torque M2 for the non-form-locking coupling is less than the maximum torque M3 that is intended to be able to be transmitted between the force-transmitting organ and the shaft, the maximum torque M2 for the non-form-locking coupling preferably being less than the maximum torque M1 for the form-locking coupling, and said shaft preferably having a diameter of 20-100 mm.

### DESCRIPTION OF DRAWINGS

The invention will be described in greater detail below with reference to the enclosed drawings, in which:
- Fig. 1: shows basic components of a preferred embodiment of a valve arrangement according to the invention,
- Fig. 2: illustrates a coupling according to the invention in a longitudinal cross-section in Fig. 1, and
- Fig. 3: shows an exploded sketch in perspective of a device according to Fig. 2.

### DETAILED DESCRIPTION

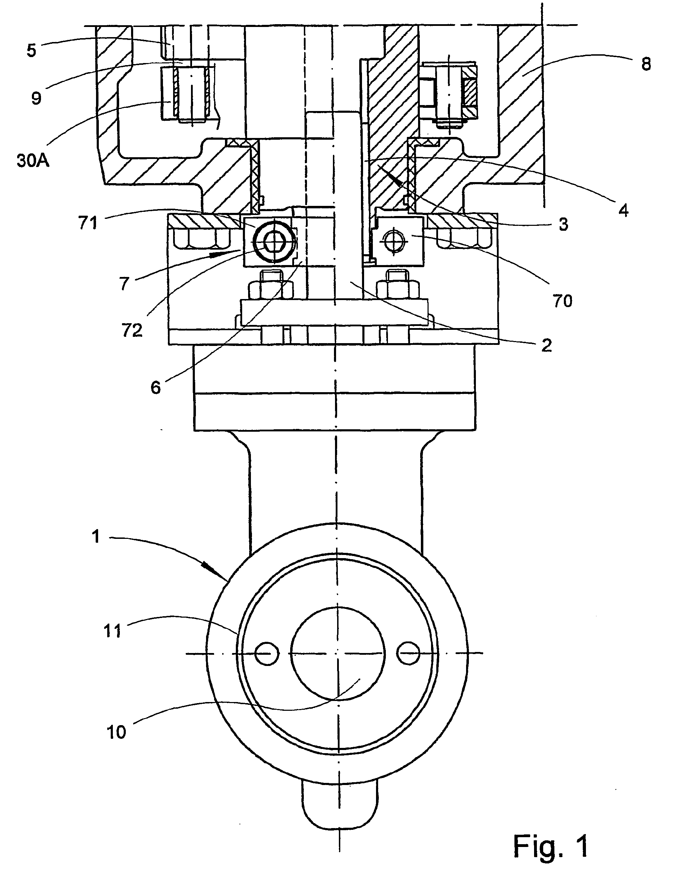

Fig. 1 shows a valve arrangement with a preferred coupling device according to the invention. A valve 1 is shown with a valve cone 10 in its closed position. The valve cone 10 is fixedly connected to a spindle 2, so that it is possible by turning the spindle 2 to position the valve cone 10 in the desired position. The spindle 2 is coupled via a force-transmitting organ hub 3 to an actuator in a known manner. The actuator comprises preferably some form of linear force-transmitting organ, e.g. a hydraulic piston, pneumatic piston, ball screw etc., the outer end 5 of which is connected to fastening lugs 30A, 30B of the force-transmitting organ 3. Fig. 1 also shows that the arrangement is best protected by a casing 8. Between the spindle 2 and the hub 3 is a form-locking coupling in the form of a conventional cotter joint 4. Furthermore, Fig. 1 shows that a further coupling is located between the hub 3 and the spindle 2. This further coupling 7 consists of a clamp coupling, which presses the spring legs 6 of the hub 3 against the spindle 2 by means of screws 72, so that a further coupling acting by means of friction/clamp force is obtained. The second coupling 6, 7 is preferably, especially in the case of larger dimensions (spindle diameter from 20 mm upwards), dimensioned to transmit a smaller maximum torque M2 than the maximum torque M1 that the cotter joint 4 is dimensioned for, i.e. M1ₘₐₓ > M2ₘₐₓ. In the case of smaller valves, in which the spindle diameter is less than 20 mm, it can be advantageous in certain cases for the maximum torque M2 for the friction coupling 7 to be on a par with (sometimes even above) the maximum torque M1 that the cotter joint is intended to handle. In general, however, it is the case that M1 is better always dimensioned to be able to handle the maximum torque M3 that is intended to be able to be transmitted between the force-transmitting organ 3 and the spindle 2 alone. Furthermore, it is generally the case that M2 is always sufficiently great to be able to take up the rather limited forces that act on the valve cone 10 in its regulating position. However, in certain situations a torque can be needed in connection with closing and opening that considerably exceeds the torque that the friction coupling 7 manages. Thanks to the form-locking cotter joint 4 (and in certain cases any interaction with the friction coupling), it is ensured that closing and opening respectively of the valve cone 10 can always be achieved. Thus it is acceptable according to the invention that a certain play can be present in the form-locking coupling. This play can mean that the position of the friction-locking coupling 7 is changed slightly after the valve cone 10 has been closed and/or opened. This possible change does not signify any problem in the regulating position, however, since the automatic control/adjustment system in real time detects the actual flow through the valve and controls in relation to the flow/change in flow, or some other variable that can be related to the flow. However, there is no play between the force-transmitting hub 3 and the spindle 2 in a regulating position for the valve, i.e. when the valve cone is at a distance from sealing engagement with the valve seat 11. The second coupling 6, 7 thus ensures that in the regulating position an entirely play-free connection is obtained between the hub 3 and the spindle 2. Consequently, very sophisticated control/adjustment systems can be utilized to the full in the regulating position, since there is no play between the movement of the controller 5 and the positioning of the valve cone 10. Optimum control of the flow through a valve 1 fitted with said coupling can therefore be obtained thanks to the system, in real time, without the need for calibration, with the greatest possible precision. At the same time, the invention offers a very cost-effective solution. In addition, the coupling device is easy to fit, dismantle and maintain, and requires small installation dimensions.

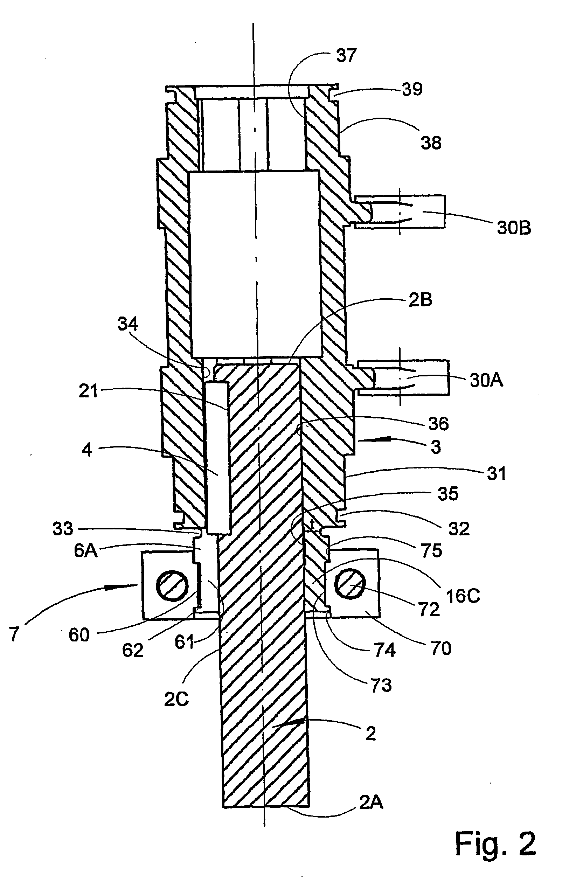

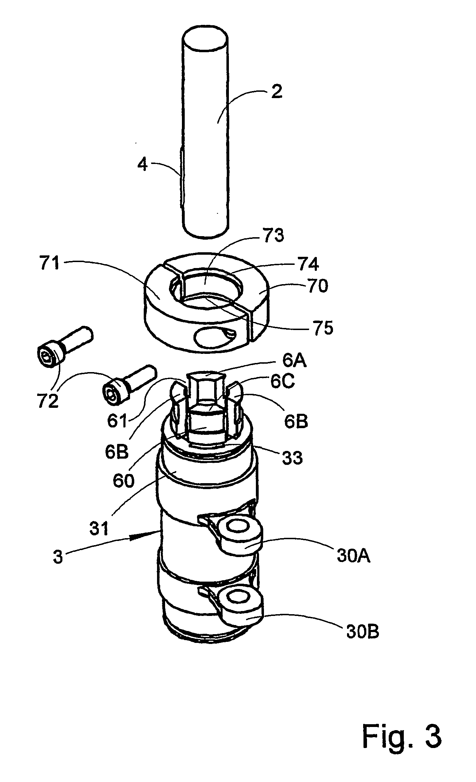

Figs. 2 and 3 show in greater detail the elements forming part of a preferred embodiment of the invention. It is shown that the spindle 2 has a lower end 2A, which is fixed in a known manner in the service position play-free on the valve cone 10 (e.g. using a screw connection or by welding). Close to the upper end 2B of the spindle 2 is a recess 21. Arranged inside the recess 21 is a cotter 4. The recess 21 is thus conventionally adapted to the shape of the cotter 4. There is a through hole 36 in the hub 3 with an inner diameter that is matched to the outer diameter of the spindle 2. In the wall of said through hole 36 is a groove 34, along the entire extension of the hole, that is matched to the cotter 4. A conventional cotter joint is thus obtained between the spindle 2 and the hub 3 by means of the cotter 4, recess 21 and groove 34. It is also shown that a further coupling 6, 7 is arranged between the spindle 2 and the hub 3. This coupling 6, 7 consists of a clamp ring 70, 71 that connects the hub 3 to the spindle 2 via sprung legs 6A-6D by means of clamping force/friction. It is evident from Fig. 2 that the two couplings 4, 21, 34 and 6, 7 respectively are axially displaced in relation to one another, i.e. they are not axially centred with regard to one another, which in certain cases means that the coupling is less bulky and that the clamp ring 70, 71 can be positioned to be especially easily accessible.

As is more clearly evident from Fig. 3, the four spring legs 6A-6D are integrated with the hub 3 at one of its ends. The spring legs 6 have a considerably smaller material thickness than the part of the hub 3 that transmits force from the fastening lugs 30A, 30B to the cotter joint 4. Furthermore, there is a relatively large interval 61 between each adjacent spring leg 6A-6D, in order to facilitate radial movement of the respective spring leg inwards without contact between the spring legs. By the connection between the hub 3 and the spring legs 6A-6D there is an outwardly directed annular groove 33. In the same radial cross-sectional plane as the annular groove 33 is a considerably less deep, inwardly directed annular groove 35 in the surface of the through hole 36. This arrangement fulfils two purposes. For the first, the outer annular groove 33 means that the wall thickness t for attachment of the respective spring legs 6A-6D is sufficiently small to obtain the required springing capacity of the spring legs. The inner annular groove 35 fulfils the purpose of ensuring the desired springing radial movement of the spring legs 6A-6D, even if some irregularity, e.g. in the form of a particle of dirt, should exist in the area of the inner annular groove 5. Thus the outer annular groove 33 ensures that the spring legs 6A-6D acquire the desired springing capacity and the inner annular groove 35 that the desired radial movement can always be achieved, even if waste matter or something else should be located between the spindle 2 and the hub 3.

Each spring leg 6A-6D is formed with a recess 60 extending in a circumferential direction, so that an edge part 62 is formed at the lower outer end of each spring leg 6A-6D. Correspondingly, the clamp coupling 70, 71 is formed with a projecting cam surface 73, which fits into the recess 60. The clamp coupling 7 comprises two halves 70, 71, which are held together by two screws 72. The projecting cam surface 73 is formed expediently by e.g. turning grooves 74, 75 from each side into the inner opening formed by the halves 70, 71.

An arrangement according to the invention is fitted by first fitting the cotter 4 in a conventional manner into the recess 21 in the spindle 2. The spindle 2 is then guided into the hole 36 in the hub 3, so that the cotter 4 runs in the groove 34. When the desired position of the spindle 2 in relation to the hub 3 has been obtained, the clamp ring 70, 71 is arranged inside the recess 60 of the spring legs 6A-6D is fitted. Then the screws 72 are tightened with the desired torque, due to which the spring legs 6A-6D are pressed in towards the envelope surface 2C of the spindle, so that a clamp/friction coupling is obtained between the spring legs 6A-6D and the envelope surface 2C of the spindle.

As is evident from the drawings, the hub 3 is provided at the top in a conventional manner with a suitable attachment organ 37 (e.g. threaded joint or screw joint) to be able to attach suitable equipment, for example for angle measurement. Furthermore, it is shown that the hub 3 is provided with recesses 31, 38 for supporting the hub 3 inside the casing 8. The hub is also suitably equipped with grooves 32, 39 for seals.

The invention is not restricted to what is shown above, but can be varied within the scope of the following claims. Thus it is perceived that form-locking coupling is taken to mean all types of known variants of form-locking couplings, such as flat-head, square locking, etc. In general, a form-locking coupling according to the invention shall be interpreted as a coupling in which plastic deformation of constituent parts or a part of the coupling must necessarily take place when the maximum loading level of said first coupling is exceeded, i.e. when the torque exceeds its plasticizing/break limit. Correspondingly, it is perceived that non-form-locking coupling shall be interpreted as a coupling, e.g. a friction coupling, which in connection with exceeding the maximum upper loading level does not give rise to permanent damage of the components (in principle without any plastic change), instead a displacement occurs between the constituent torque-transmitting parts in connection with exceeding of the maximum loading level. It is therefore perceived that even couplings that utilize form-locking to a certain extent, for example extremely small grooves, can be used to achieve what in the claims is termed the essentially non-form-locking coupling. Furthermore, it is perceived that the coupling can be used advantageously in all-types of valve arrangements, or corresponding arrangements, in which there is a requirement (or can be a requirement) for a considerably higher torque in certain extreme positions than in a regulating position. It is perceived that the non-form-locking coupling can be given many other embodiments than those described above. The number of spring legs, for example, can thus be varied within a wide range. Furthermore, many other clamp couplings can be used, for example conventional hose clips or oil hydraulics, to achieve the desired clamping force.

## Claims

1. Coupling device, preferably in connection with a valve (1), between a shaft (2) and a force-transmitting organ (3), comprising a non-play-free form-locking coupling (21, 34, 4) that is arranged between said force-transmitting organ (3) and said shaft (2), which coupling (21, 34, 4) is dimensioned such that a certain maximum first torque (M1) can be transmitted via said coupling, **characterized in that** a second coupling, in the form of an essentially non-form-locking coupling (6, 7) dimensioned for a certain maximum second torque (M2), is arranged between said shaft (2) and said force-transmitting organ (3), which coupling complements and relieves said form-locking coupling (21, 34, 4), said essentially non-form-locking coupling (6, 7) being play-free.

2. Coupling device according to claim 1, **characterized in that** said second coupling (6, 7) includes elements (6) that are integrated with said force-transmitting organ (3).

3. Coupling device according to claim 2, **characterized in that** said elements (6) are sprung elements.

4. Coupling device according to claim 2, **characterized in that** said sprung elements consist of at least two spring legs (6A, 6C), preferably at least three, which extend at one end of said force-transmitting organ (3).

5. Coupling device according to one of the above claims, **characterized in that** said second coupling comprises a clamp device (7).

6. Coupling device according to claim 5, **characterized in that** said clamp device (7) comprises at least one threaded joint (72), with which the clamp coupling (7) is fixed.

7. Coupling device according to claim 1, **characterized in that** said force-transmitting organ (3) is disposed lying outside, at least partly, in relation to said shaft (2).

8. Coupling device according to claim 1, **characterized in that** said force-transmitting organ (3) forms part of an actuator and that said shaft (2) consists of a spindle in a valve (1).

9. Coupling device according to claim 1, **characterized in that** said form-locking coupling (21, 34, 4) is arranged at a first position and that the position of said second coupling (6, 7) is at least partly axially displaced in relation to said first position.

10. Coupling device according to claim 6, **characterized in that** said fixing is obtained by means of pre-tensioning in said threaded joint (72).

11. Coupling device according to claim 1, **characterized in that** the maximum torque (M2) for the non-form-locking coupling is less than the maximum torque (M3) that is intended to be able to be transmitted between the force-transmitting organ (3) and the shaft (2), preferably the maximum torque (M2) for the non-form-locking coupling (6, 7) being less than the maximum torque (M1) for the form-locking coupling (21, 34, 4), and preferably said shaft (2) having a diameter of 20-100 mm.

## Patentansprüche

1. Kupplungsvorrichtung, vorzugsweise in Verbindung mit einem Ventil (1), zwischen einer Welle (2) und einem kraftübertragenden Organ (3), umfassend eine nicht spielfreie, formschlüssige Kupplung (21, 34, 4), die zwischen dem kraftübertragenden Organ (3) und der Welle (2) angeordnet ist, wobei die Kupplung (21, 34, 4) so dimensioniert ist, dass ein bestimmtes, maximales erstes Drehmoment (M1) über die Kupplung übertragen werden kann, **gekennzeichnet dadurch, dass** eine zweite Kupplung in der Form einer im Wesentlichen nicht formschlüssigen Kupplung (6, 7), die für ein bestimmtes maximales zweites Drehmoment (M2) dimensioniert ist, zwischen der Welle (2) und dem kraftübertragenden Organ (3) angeordnet ist, wobei diese Kupplung die formschlüssige Kupplung (21, 34, 4) ergänzt, und wobei die im Wesentlichen nicht formschlüssige Kupplung spielfrei ist.

2. Kupplungsvorrichtung nach Anspruch 1, **gekennzeichnet dadurch, dass** die zweite Kupplung (6, 7) Elemente (6) umfasst, die in das kraftübertragende Organ (3) integriert sind.

3. Kupplungsvorrichtung nach Anspruch 2, **gekennzeichnet dadurch, dass** es sich bei den Elementen (6) um Federelemente handelt.

4. Kupplungsvorrichtung nach Anspruch 2, **gekennzeichnet dadurch, dass** die Federelemente aus mindestens zwei Federbeinen (6A, 6C), vorzugsweise jedoch aus mindestens drei Federbeinen bestehen, die an einem Ende des kraftübertragenden Organs (3) verlaufen.

5. Kupplungsvorrichtung nach einem der obigen Ansprüche, **gekennzeichnet dadurch, dass** die zweite Kupplung eine Klemmvorrichtung (7) umfasst.

6. Kupplungsvorrichtung nach Anspruch 5, **gekennzeichnet dadurch, dass** die Klemmvorrichtung (7) mindestens eine Gewindeverbindung (72) umfasst, mit der die Klemmkupplung (7) fixiert ist.

7. Kupplungsvorrichtung nach Anspruch 1, **gekennzeichnet dadurch, dass** das kraftübertragende Organ (3) in Bezug auf die Welle (2) zumindest teilweise außerhalb verläuft.

8. Kupplungsvorrichtung nach Anspruch 1, **gekennzeichnet dadurch, dass** das kraftübertragende Organ (3) einen Teil eines Aktuators bildet und die Welle (2) aus einer Spindel in einem Ventil (1) besteht.

9. Kupplungsvorrichtung nach Anspruch 1, **gekennzeichnet dadurch, dass** die formschlüssige Kupplung (21, 34, 4) an einer ersten Position angeordnet ist und dass die Position der zweiten Kupplung (6, 7) in Bezug auf die erste Position zumindest teilweise axial versetzt ist.

10. Kupplungsvorrichtung nach Anspruch 6, **gekennzeichnet dadurch, dass** die Fixierung durch eine Vorspannung in der Gewindeverbindung (72) erreicht wird.

11. Kupplungsvorrichtung nach Anspruch 1, **gekennzeichnet dadurch, dass** das maximale Drehmoment (M2) für die nicht formschlüssige Kupplung geringer als das maximale Drehmoment (M3) ist, dessen Übertragung zwischen dem kraftübertragenden Organ (3) und der Welle (2) möglich sein soll, vorzugsweise ist das maximale Drehmoment (M2) der nicht formschlüssigen Kupplung (6, 7) geringer als das maximale Drehmoment (M1) der formschlüssigen Kupplung (21, 34, 4), und vorzugsweise hat die Welle (2) einen Durchmesser von 20-100 mm.

## Revendications

1. Dispositif d'accouplement, de préférence lié à une soupape (1), entre un axe (2) et un organe de transmission de force (3), comprenant un accouplement par complémentarité de forme (21, 34, 4), non dépourvu de jeu, qui est disposé entre l'organe de transmission de force (3) et l'axe (2), lequel accouplement (21, 34, 4) est dimensionné de telle sorte qu'un certain premier couple maximal (M1) puisse être transmis par l'intermédiaire de l'accouplement, **caractérisé en ce qu'**un second accouplement, sous la forme d'un accouplement globalement sans complémentarité de forme (6, 7) dimensionné pour un certain second couple maximal (M2), est disposé entre l'axe (2) et l'organe de transmission de force (3), lequel accouplement complète et décharge l'accouplement par complémentarité de forme (21, 34, 4), ledit accouplement globalement sans complémentarité de forme (6, 7) étant sans jeu.

2. Dispositif d'accouplement selon la revendication 1, **caractérisé en ce que** le second accouplement (6, 7) comprend des éléments (6) qui sont intégrés à l'organe de transmission de force (3).

3. Dispositif d'accouplement selon la revendication 2, **caractérisé en ce que** les éléments (6) sont des éléments élastiques.

4. Dispositif d'accouplement selon la revendication 2, **caractérisé en ce que** les éléments élastiques se composent d'au moins deux pattes faisant ressort (6A, 6C), de préférence au moins trois, qui s'étendent à une extrémité de l'organe de transmission de force (3).

5. Dispositif d'accouplement selon l'une des revendications précédentes, **caractérisé en ce que** le second accouplement comprend un dispositif de serrage (7).

6. Dispositif d'accouplement selon la revendication 5, **caractérisé en ce que** le dispositif de serrage (7) comprend au moins une liaison à vis (72) avec laquelle l'accouplement par serrage (7) est fixé.

7. Dispositif d'accouplement selon la revendication 1, **caractérisé en ce que** l'organe de transmission de force (3) est disposé à l'extérieur, au moins en partie, par rapport à l'axe (2).

8. Dispositif d'accouplement selon la revendication 1, **caractérisé en ce que** l'organe de transmission de force (3) fait partie d'un organe d'actionnement et **en ce que** l'axe (2) se compose d'une tige dans une soupape (1).

9. Dispositif d'accouplement selon la revendication 1, **caractérisé en ce que** l'accouplement par complémentarité de forme (21, 34, 4) est disposé au niveau d'une première position et **en ce que** la position du second accouplement (6, 7) est au moins en partie décalée axialement par rapport à la première position.

10. Dispositif d'accouplement selon la revendication 6, **caractérisé en ce que** la fixation est obtenue à l'aide d'une contrainte préalable dans la liaison filetée (72).

11. Dispositif d'accouplement selon la revendication 1, **caractérisé en ce que** le couple maximal (M2) pour l'accouplement sans complémentarité de forme est inférieur au couple maximal (M3) qui est censé pouvoir être transmis entre l'organe de transmission de force (3) et l'axe (2), le couple maximal (M2) pour l'accouplement sans complémentarité de forme (6, 7) étant de préférence inférieur au couple maximal (M1) pour l'accouplement par complémentarité de forme (21, 34, 4), et l'axe (2) ayant de préférence un diamètre de 20 à 100 mm.
